# EUROPÄISCHE PATENTSCHRIFT

(11) **EP 2 944 019 B1**
(45) Veröffentlichungstag und Bekanntmachung des Hinweises auf die Patenterteilung: **20.07.2016**
(21) Anmeldenummer: 14758390.0
(22) Anmeldetag: 01.09.2014
(51) Int. Cl.: H02M 5/458, H02J 3/38, F03B 13/06, H02M 7/483

(54) **ELEKTRISCHE EINHEIT FÜR EIN PUMPSPEICHERKRAFTWERK**
ELECTRIC UNIT FOR A PUMP-STORAGE POWER PLANT
UNITÉ ÉLECTRIQUE POUR UNE CENTRALE HYDRAULIQUE D'ACCUMULATION PAR POMPAGE

(30) Priorität: 30.08.2013 EP 13182394; 10.09.2013 DE 102013014830
(43) Veröffentlichungstag der Anmeldung: 18.11.2015
(73) Patentinhaber: ABB Technology AG, 8050 Zürich (CH)
(72) Erfinder: STEIMER, Peter, CH-5420 Ehrendingen (CH); LINDER, Stefan, CH-4800 Zofingen (CH); AUBERT, Steve, CH-8304 Wallisellen (CH); THURNHERR, Tobias, 5408 Ennetbaden (CH)
(74) Vertreter: ABB Patent Attorneys
(86) Internationale Anmeldenummer: PCT/EP2014/068504
(87) Internationale Veröffentlichungsnummer: WO 2015/028663

(56) Entgegenhaltungen:
- EP-A2- 2 133 987
- WO-A1-2005/073550
- WO-A1-2008/110129
- DE-A1- 2 206 780
- US-A1- 2011 075 465
- US-A1- 2013 208 519
- US-B2- 8 451 636

## Beschreibung

### TECHNISCHES GEBIET

Die Erfindung betrifft ein Pumpspeicherkraftwerk, insbesondere eine elektrische Einheit hierfür umfassend einen Umrichter und eine rotierende elektrische Synchron-Maschine, wobei die Synchron-Maschine über den Umrichter mit dem Stromnetz verbindbar ist.

### STAND DER TECHNIK

Regenerative Energiequellen wie beispielsweise Wind- und Solarenergie liefern einen stetig zunehmenden Anteil am Elektrizitätsbedarf. Diese Energiequellen weisen dabei allerdings unstetige Betriebszeiten auf. Somit kann eine direkte und dauerhafte Versorgung von Verbrauchern mit Elektrizität aus diesen Energiequellen nicht gewährleistet werden. Hierzu müssen Energiespeicher verwendet werden, welche schnelle Wechsel zwischen Elektrizitätsüberschuss und Elektrizitätsdefizit erlauben und deren Leistung und Energieflussrichtung rasch und kontinuierlich verändert werden können.

Als Energiespeicher stehen hierbei unterschiedliche System zur Verfügung, welche sich jeweils für bestimmte Energiemengen besonders eignen. Für kleine Energiemengen, bis etwa 100 MWh, werden Schwungrad- oder Batteriespeicher verwendet. Für mittlere bis große Energiemengen von etwa 100 MWh bis 1 GWh eignen sich besonders Druckluftspeicher. Für große Energiemengen, typischerweise über 100 MWh und meist über 1 GWh, werden Pumpspeicher eingesetzt.

Pumpspeicher oder Pumpspeicherkraftwerke sind auf Grund der großen speicherbaren Energiemenge besonders interessant. Dabei wird mit überschüssiger Elektrizität Wasser von einem ersten natürlichen oder künstlich hierfür angelegtem Speicherbecken in ein zweites, höher gelegenes Speicherbecken gepumpt. Die elektrische Energie wird in potenzielle Energie umgewandelt. Zur Rückgewinnung von Elektrizität wird Wasser vom höher gelegenen Speicherbecken über eine Turbine zurück ins niedrigere Speicherbecken geleitet.

Moderne Pumpspeicher weisen drehzahlvariable Antriebe auf. Durch eine Entkoppelung der Drehzahl der Maschinen von einer Netzfrequenz können Pump- und Turbinendrehgeschwindigkeiten so eingestellt werden, dass diese nahe am optimalen Wirkungsgrad betrieben werden. Dabei erlaubt es die Variation der Drehzahl im Pumpbetrieb, die Leistungsaufnahme frei einzustellen. Insbesondere können Systeme mit variabler Drehzahl schnell aus dem Stillstand mit dem Netz verbunden oder synchronisiert werden.

Pumpspeicher gemäss dem Stand der Technik weisen doppelt gespeiste Asynchronmaschinen und leistungselektronische Umformer auf, womit eine Drehzahlregelung einer Pumpe und einer Turbine möglich ist. Damit wird zum einen eine Pumpleistung geregelt und zum anderen kann bei Bedarf der Wirkungsgrad der Anlage erhöht werden. Eine gattungsgemäße elektrische Erenheit ist aus der WO 2005/073550 A1 bekannt.

In einer Ausführungsform zur Drehzahlregelung der Pumpe oder der Turbine wird eine Synchron-Maschine verwendet deren Stator mittels eines Drehstroms mit einstellbarer Frequenz gespeist wird. Die Frequenzumformung wird dabei mit Hilfe einer Kombination eines Gleichrichters und eines Wechselrichters erzeugt, welche über einen Spannungs- oder Stromzwischenkreis miteinander verbunden sind.

Bei dem Einsatz einer solchen über einen Umrichter gespeisten Synchron-Maschine ist ein Anlaufmoment der Synchron-Maschine ausreichend um beispielsweise die Pumpe aus dem Stand ohne vorheriges Ausblasen einer Wassersäule aus der Pumpe zu ermöglichen. Weiterhin kann der Stator kleiner ausgelegt werden als beispielsweise bei einer doppeltgespeisten Asynchronmaschine, da zum einen nur Wirkleistung fliesst und zum Anderen keine Energie innerhalb der Synchron-Maschine zirkuliert. Aus einer vereinfachten Konstruktion des Rotors ergibt sich die Möglichkeit die Synchron-Maschine mit einer höheren Drehzahl und in einem breiten Drehzahlbereich zu betreiben. Dies ist insbesondere bei Pumpspeicherkraftwerken mit hoher Leistung und grosser Fallhöhe des herabströmenden Wassers von Bedeutung.

Ein wesentlicher Nachteil der Anordnung gemäß dem Stand der Technik ist, dass der Umrichter bei der Verbindung mit dem Stromnetz einem sehr hohen Einschaltstrom ausgesetzt ist. Der sehr hohe Einschaltstrom wird durch das Aufladen von Kapazitäten und Akkumulatoren von Zellen des Umrichters verursacht. Dieser hohe Einschaltstrom bedeutet eine sehr hohe Belastung des Umrichters und dessen Komponenten, was letztlich zu einem Defekt oder einem hohen Verschleiß und verringerter Laufzeit des Umrichters führt. Ein Ausfall des Umrichters ist dabei mit sehr hohen Wartungskosten und Ausfallzeiten der Anlage verbunden. Darüber hinaus schlagen sich eventuelle Ausfallzeiten direkt auf die Kosten der elektrischen Einheit aus.

Weiterhin müssen die Komponenten des Umrichters derart ausgelegt werden um dem hohen Einschaltstrom überhaupt standzuhalten zu können, was zu erhöhten Investitionskosten bei der Installation der elektrischen Einheit führt.

Davon ausgehend liegt der vorliegenden Erfindung die Aufgabenstellung zugrunde, Pumpspeicherkraftwerke ausfallsicherer und kostengünstiger zu gestalten.

### BESCHREIBUNG DER ERFINDUNG

Diese Aufgabe wird durch eine elektrische Einheit für ein Pumpspeicherkraftwerk gemäss Anspruch 1 und ein Verfahren zu dessen Anwendung gemäss dem Anspruch 10 gelöst. Weitere vorteilhafte Ausgestaltungen ergeben sich aus den abhängigen Ansprüchen, wobei die Rückbezüge der Ansprüche keine weiteren sinnvollen Anspruchskombinationen ausschliesst.

Die Erfindung sieht dabei eine elektrische Einheit für ein Pumpspeicherkraftwerk vor, wobei diese mit einem Stromnetz zur Übertragung von elektrischer Energie und einem Versorgungsnetz verbindbar ist. Die elektrische Einheit umfasst dabei zumindest einen Umrichter oder Frequenzumrichter und eine rotierende elektrische Synchron-Maschine, welche in Abhängigkeit einer Betriebsart der Synchron-Maschine als Motor oder Generator dient. Die Synchron-Maschine ist mit einer Turbine oder Wasserturbine und einer Pumpe oder Wasserpumpe oder einer reversiblen Pumpturbine beispielsweise mechanisch verbindbar und ist unterhalb eines Speicherbeckens vorgesehen.

Weiterhin umfasst die elektrische Einheit eine Aufladeeinheit, wobei die Aufladeeinheit zumindest einen Transformator, einen Widerstand oder einen spezifischen Converter (Softstarter) in Verbindung mit einem Schalter aufweist und mit dem Versorgungsnetz einerseits und dem Umrichter andererseits verbindbar ist. Dabei kann das Versorgungsnetz mit dem die Aufladeeinheit verbunden ist mit dem Stromnetz mit dem der Umrichter verbunden identisch sein oder sich davon unterscheiden. Die Aufladeeinheit dient dabei dem Aufladen von Kondensatoren und Akkumulatoren von Zellen des Umrichters um hohe Einschaltströme bei einem Verbinden des Umrichters mit dem Stromnetz zu verhindern und damit die Belastung des Umrichters und dessen Komponenten zu reduzieren, die Ausfallsicherheit des Umrichters zu erhöhen und die Lebensdauer des Umrichters zu verlängern. Dabei wird über den Transformator der Aufladeeinheit der Einschaltstrom beim Aufladen der Zellen des Umrichters begrenzt und das Aufladen erfolgt im Vergleich zu einem direkten Anschluss des Umrichters langsam. Falls notwendig kann zur weiteren Begrenzung des Einschaltstroms ein zusätzlicher leistungselektronischer Softstarter eingesetzt werden. Softstarter können dabei mechanische und elektronische Bestandteile umfassen, wobei beispielsweise der mechanische Bestandteil ähnlich einer Rutschkupplung funktioniert und der elektronische Bestandteil einen Strom oder eine Spannung reduziert.

In einer vorteilhaften Ausgestaltung kann die Aufladeeinheit einen Transformator aufweisen, um auf der Seite des Umrichters eine Wechselspannung bereit zu stellen.

In einer vorteilhaften Ausgestaltung kann der Umrichter einen Frequenzumrichter sowie netzseitige Schaltelemente und maschinenseitige Schaltelemente aufweisen. Der Frequenzumrichter umfasst zumindest zwei elektrisch verbindbare Elemente, wobei in Abhängigkeit des Betriebs der Maschine jeweils ein Element als ein Gleichrichter und ein Element als ein Wechselrichter verwendbar ist. Ein maschinenseitiges Element ist eine Inverter Unit INU und ein netzseitiges Element ist eine Active Rectifier Unit ARU. Der Umrichter kann darüber hinaus an netzseitigen und maschinenseitigen Ausgängen der Elemente Trenner zur Potentialfreischaltung des Umrichters aufweisen.

In einer weiteren vorteilhaften Ausgestaltung sind die Maschine und die Aufladeeinheit über eine Nebenleitung, auch Bypass genannt, direkt oder unmittelbar mit einem Blocktransformator verbindbar, wobei der Blocktransformator über einen Leistungsschalter mit dem Stromnetz verbindbar ist und die Nebenleitung einen Trenner oder Leistungsschalter aufweist.

Gemäß der Erfindung ist zwischen der Aufladeeinheit und der Maschine ein Trenner oder ein Generatorschalter vorgesehen.

Weiterhin ist die Maschine über eine Erregereinheit mit dem Versorgungsnetz verbindbar, wobei die Erregereinheit einen Gleichrichter und einen Transformator aufweist. In einer besonders vorteilhaften Ausgestaltung ist die Aufladeeinheit und die Erregereinheit als eine integrierte Einheit ausgebildet sind.

In einer weiteren vorteilhaften Ausführungsform ist vorgesehen, dass der Umrichter als Modularer Multilevel Umrichter ausgebildet ist. Weiterhin kann ein ein Schwarzstart-Aggregat zur Energieversorgung des Versorgungsnetz an dieses angeschlossen sein. Damit kann auch bei einem Ausfall des Versorgungsnetzes die elektrische Einheit hochgefahren werden um die Synchron-Maschine mit dem Stromnetz zu verbinden.

Die Erfindung bezieht sich weiterhin auf ein System eines Pumpspeicherkraftwerk, dadurch gekennzeichnet, dass das System eine zuvor beschriebene elektrische Einheit und eine mit der Synchron-Maschine gekoppelte Turbine und/oder Pumpe und/oder eine Pumpenturbine aufweist.

Die Erfindung bezieht sich weiterhin auf ein Verfahren zur Verwendung einer elektrischen Einheit für ein Pumpspeicherkraftwerk umfassend eine rotierende elektrische synchron Maschine und einen Umrichter, wobei die Maschine über den Umrichter und einen Blocktransformator mit einem Stromnetz zur Übertragung von elektrischer Energie und einem Versorgungsnetz verbindbar ist und wobei der Blocktransformator über einen Trenner oder Leistungsschalter von dem Stromnetz trennbar ist, und zwischen der Aufladeeinheit und der Maschine ein Generatorschalter vorgesehen ist. Das Verfahren umfasst dabei ein Öffnen des Leistungsschalters zum Trennen des Blocktransformators von dem Stromnetz; ein Öffnen des Generatorschalters zur Trennung der Maschine von dem Umrichter; ein Aufladen von Kondensatoren und/oder Akkumulatoren aufweisenden Zellen des Umrichters durch Schließen eines Schalters der Aufladeeinheit, wobei durch das Schließen des Schalters der Umrichter über einen Transformator der Aufladeeinheit mit dem Versorgungsnetz verbunden wird;; und ein Schließen des Generatorschalters zur Verbindung der Maschine mit dem Umrichter und/oder der Nebenleitung. Nach dem vollständigen Aufladen des Umrichters kann der Schalter der Aufladeeinheit geöffnet werden.

Das Verfahren umfasst dabei in einer vorteilhaften Ausführungsform, dass das Aufladen der Zellen des Umrichters eine erste Ladeperiode aufweist, wobei Schaltelemente des Umrichters derart geschaltet werden, dass maschinenseitige Zellen des Umrichters vollständig oder zumindest beinahe vollständig bis zu etwa 90 bis 95% und netzseitige Zellen des Umrichters teilweise beispielsweise bis zu 45 bis 50% geladen werden.

In einer weiteren vorteilhaften Ausführungsform umfasst das Verfahren, dass das Aufladen der Zellen des Umrichters eine zweite Ladeperiode aufweist, wobei Schaltelemente des Umrichters derart geschaltet werden, dass die netzseitigen Zellen des Umrichters vollständig geladen werden.

In einer besonders vorteilhaften Ausführungsform umfasst das Verfahren optional, dass nach dem Aufladen der Zellen des Umrichters das Verfahren weiter ein Magnetisieren des Blocktransformators durch entsprechendes Steuern der Schaltelemente des Umrichters;; und ein Schließen des Leistungsschalters zur Verbindung des Blocktransformators mit dem Stromnetz umfasst. Dabei kann in einer weiteren Ausführungsform vorgesehen sein, dass der Leistungsschalter der Nebenleitung zum Magnetisieren des Blocktransformators geschlossen wird. Nach dem vollständigen Magnetisieren des Blocktransformators kann der Schalter der Aufladeeinheit geöffnet werden.

Entsprechend der Erfindung wird die Belastung des Umrichters und dessen Komponenten reduziert, die Ausfallsicherheit des Umrichters erhöht und die Lebensdauer des Umrichters verlängert. Durch das Trennen des Aufladevorgangs der Zellen des Umrichters von der Verbindung des Umrichters über den Blocktransformator mit dem Stromnetz und das Begrenzen des Einschaltstroms über die Aufladeeinheit wird damit auch die Ausfallsicherheit der elektrischen Einheit erhöht.

### KURZBESCHREIBUNG DER ZEICHNUNGEN

Weitere Merkmale, Einzelheiten und Vorteile der Erfindung ergeben sich aus dem Wortlaut der Ansprüche sowie aus der Beschreibung von Ausführungsbeispielen anhand der Figur.

Die Erfindung wird in weiteren Einzelheiten anhand des nachfolgenden Textes mit Bezug auf bevorzugte Ausführungsbeispiele anhand der Figur näher erläutert.

### Es zeigt

Fig.1 eine schematische Darstellung einer elektrischen Einheit mit einem Umrichter, einer elektrischen synchron Maschine und einer Aufladeeinheit.
Fig. 2 eine schematische Darstellung der elektrischen Einheit aus Fig. 1 mit einem zusätzlichen Aggregat, und
Fig. 3 eine schematische Darstellung eines Systems eines Pumpspeicherkraftwerks.

Die Bezugszeichen und deren Bedeutung sind zusammengefasst in der Bezugszeichenliste. Im Allgemeinen bezeichnen dieselben Bezugszeichen dieselben Teile.

### DETAILIERTE BESCHREIBUNG BEISPIELHAFTER AUSFÜHRUNGSFORMEN

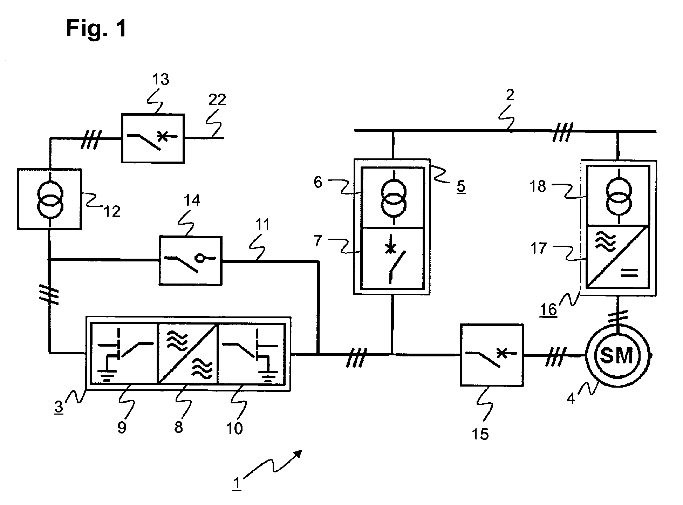

Fig.1 zeigt in einer schematischen Darstellung eine elektrische Einheit 1 verbunden mit einem Stromnetz 22 zur Übertragung von elektrischer Energie und einem Versorgungsnetz 22. Typischerweise ist das Stromnetz 22 über einen in den Figuren nicht gezeigten Transformator und Leistungsschalter mit dem Versorgungsnetz 2 gekoppelt. Prinzipiell könnte das Stromnetz 22 mit dem Versorgungsnetz 2 auch identisch sein

Die elektrische Einheit 1 umfasst dabei einen Umrichter 3 und eine rotierende elektrische Synchron-Maschine 4, im Folgenden als Maschine 4 bezeichnet. Die Maschine 4 kann dabei beispielsweise auf Grund von örtlichen Gegebenheiten oder zum Schutz in einer Kaverne untergebracht sein.

Weiterhin weist die elektrische Einheit 1 eine Aufladeeinheit 5 auf, wobei die Aufladeeinheit 5 einerseits mit dem Versorgungsnetz 2 und andererseits mit dem Umrichter 3 verbindbar ist.

Die Aufladeeinheit 5 kann zumindest einen Transformator 6 und einen Schalter 7 aufweisen. Weiter stellt die Aufladeeinheit 5 auf der Seite des Umrichters 3 eine Wechselspannung bereit.

Die Aufladeeinheit 5 dient dabei dem Aufladen von Kondensatoren und Akkumulatoren von Zellen des Umrichters 3 um hohe Einschaltströme bei einem Verbinden des Umrichters 3 mit dem Stromnetz 22 zu verhindern und damit die Belastung des Umrichters 3 und dessen Komponenten zu reduzieren. Dabei wird über den Transformator 6 der Aufladeeinheit 5 der Einschaltstrom beim Aufladen der Zellen des Umrichters 3 begrenzt und das Aufladen erfolgt im Vergleich zu einem direkten Anschluss des Umrichters 3 an das Stromnetz 2 langsam.

Der Umrichter 3 weist einen Frequenzumrichter 8 sowie netzseitige Schaltelemente 9 und maschinenseitige Schaltelemente 10 auf. Die Schaltelemente 9, 10 oder auch ein erster und zweiter Trenner können vor dem netzseitigen Gleich- oder Wechselrichter des Umrichters 3 auch Active Rectifier Unit genannt und dem maschinenseitigen Gleich- oder Wechselrichter des Umrichters 3 auch Inverter Unit genannt zur Potenzialfreischaltung des Umrichters 3 beispielsweise zur Wartung des Umrichters vorgesehen sein. Eine Frequenzumformung wird mittels einer Kombination eines Gleichrichters und eines Wechselrichters erzeugt, welche über einen konzentrierten oder verteilten Spannungszwischenkreis oder Stromzwischenkreis miteinander verbunden sind. Der Zwischenkreis weist dabei weiterhin Einheiten zur Energiespeicherung auf beispielsweise Kondensatoren bei einem Spannungszwischenkreis und Induktivitäten bei einem Stromzwischenkreis.

Zum Umgehen oder Überbrücken des Umrichters 3 beispielsweise zur Wartung des Umrichters 3 weist die elektrische Einheit eine Nebenleitung 11 oder einen Bypass auf, wobei diese weiterhin einen Trenner oder einen Leistungsschalter 14 aufweist.

In der dargestellten Ausführungsform wird zur Drehzahlregelung einer mit der Synchron-Maschine 4 gekoppelten Pumpe oder Turbine die Maschine 4 mittels eines Drehstroms mit einstellbarer Frequenz gespeist. Die Maschine 4 ist hierzu über eine Erregereinheit 16, umfassend einen Gleichrichter 17,und einen Transformator 18, mit dem Versorgungsnetz 2 verbunden.

Darüber hinaus kann bei Netzbetrieb der Maschine 4 im Betrieb über die Nebenleitung 11 der netzseitige Teil des Umrichters 3 eine Blindleistung regeln, wobei der maschinenseitige Teil des Umrichters abgeschaltet oder mitgenutzt wird bei geschlossener Nebenleitung 11 ist. Dabei kann es von Vorteil sein Impedanzen zwischen dem Leistungsschalter 14 und dem Umrichter 3 vorzusehen. Der Umrichter 3 kann damit zusätzlich 100% Blindleistung zur Verfügung stellen. Zur Netzstützung bei Störfällen stehen somit selbst ohne Blindleistungsregelung über die Erregung der Maschine 4 bis zu 140% Scheinleistung zur Verfügung. Unter Einbezug der zusätzlichen Regelung der Blindleistung durch die Maschine 4 steht je nach Betriebszustand der Maschine 4 noch deutlich mehr Blindleistung zur Verfügung. Insbesondere steht durch diese Anordnung auch Blindleistung zur Verfügung, wenn die Maschine nicht in Betrieb ist. Dies erlaubt es, Blindleistung mit deutlich geringeren Verlusten bereit zu stellen. Darüber hinaus kann der Umrichter 3 bei Stillstand der Maschine in einem Phasenschiebermodus betrieben werden.

Die Maschine 4 und die Aufladeeinheit 5 sind über die Nebenleitung 11 direkt oder unmittelbar mit dem Blocktransformator 12 verbunden, wobei der Blocktransformator 12 über einen Leistungsschalter 13 mit dem Stromnetz 22 verbunden ist. In der dargestellten Ausführungsform sind die Aufladeeinheit 5 und die Erregereinheit 16 getrennt voneinander ausgebildet, dabei ist es weiterhin auch eine Möglichkeit diese in einer integrierten Einheit vorzusehen.

Weiterhin weist der Betrieb der Maschine 4 mit einer frei wählbaren Drehzahl erhebliche Vorteile auf, insbesondere kann etablierte, zuverlässige und wartungsarme Generatortechnologie verwendet werden. Weiterhin besteht die Möglichkeit, eine Pumpe und eine Turbine unabhängig voneinander in deren optimalen Drehzahlbereich zu betreiben. Durch die Verwendung der Synchronmaschine 4 sind insbesondere auch hohe Drehzahlen beispielsweise für hohe Gefälle realisierbar. Darüber hinaus reicht der betrieblich zugängliche Drehzahlbereich kontinuierlich von Null bis zur maximalen Drehzahl und ist nur beschränkt durch die betrieblichen Grenzen der Pumpe und der Turbine. Die Pumpe und die Turbine können prinzipiell in einer Einheit beispielsweise einer Pumpenturbine vereint werden. Insbesondere besteht die Möglichkeit einer Nachrüstung von älteren Anlagen auf variablen Frequenzbetrieb, ohne Austausch des bestehenden Generators. Ein weiterer Vorteil ist eine sehr rasche Netzkoppelung und die Möglichkeit positive und negative Blindleistung im Frequenzumrichter 8 zu erzeugen, damit kann der Generator ausschließlich mit Wirkleistung betrieben werden, wodurch dieser eine kompaktere Bauart aufweist. Weiterhin kann durch die Verwendung des Frequenzumrichters 8 schnell beispielsweise vom Pump- in Turbinenbetrieb umgeschaltet werden.

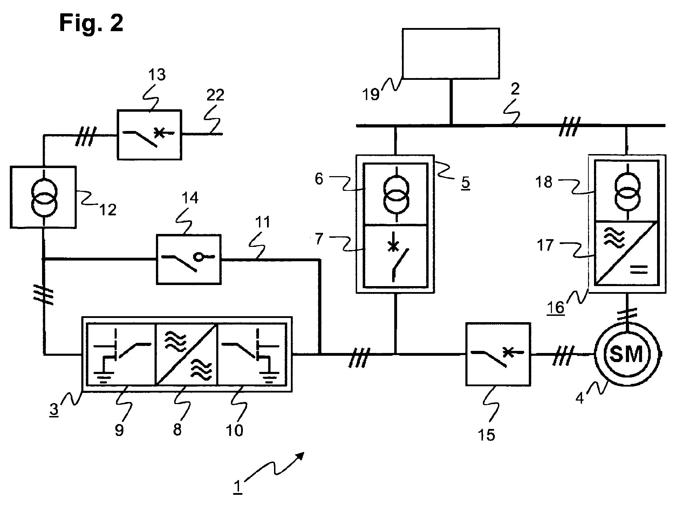

Fig. 2 zeigt eine schematische Darstellung der elektrischen Einheit 1 aus Fig. 1 mit einem zusätzlichen Aggregat, welches als Schwarz-Startaggregat 19, oder auch Notstromaggregat genannt, ausgebildet sein kann. Das Schwarz-Startaggregat 19 kann dabei beispielsweise einen Dieselmotor oder eine Gasturbine und einen Generator umfassen und versorgt das Versorgungsnetz 2 mit Energie zum Betreiben der elektrischen Einheit 1 des Pumpspeicherkraftwerks. Das Schwarz-Startaggregat 19 erlaubt es unabhängig vom Versorgungsnetz 2 im abgeschalteten Zustand das Pumpspeicherkraftwerk hochzufahren und mit dem Stromnetz 22 zu verbinden. Dies ist insbesondere bei einem flächendeckenden Stromausfall von Bedeutung, um das Stromnetz 22 wieder in Betrieb zu nehmen.

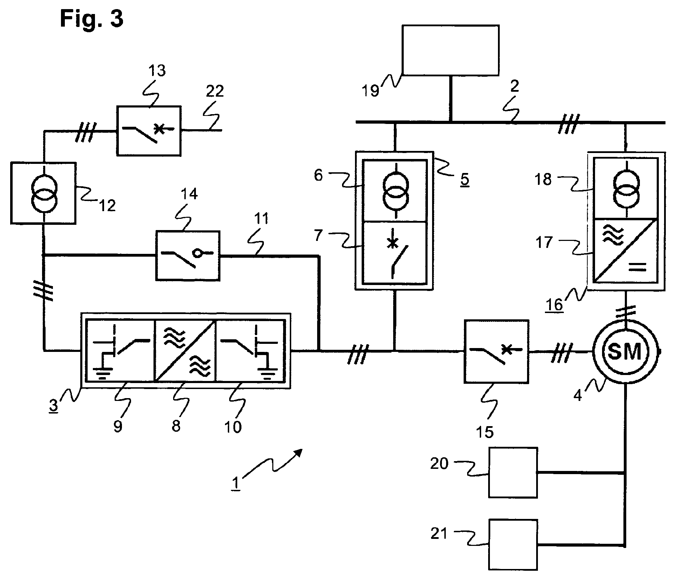

Fig. 3 zeigt eine schematische Darstellung eines Systems eines Pumpspeicherkraftwerks nach Fig. 1 und Fig. 2, wobei die Maschine 4 mit einer Turbine 20 und mit einer Pumpe 21 verbunden ist. Die Pumpe 20 und die Turbine 21 können dabei wie dargestellt getrennt vorgesehen sein oder als Pumpturbine ausgebildet sein. Somit kann das Pumpspeicherkraftwerkt überschüssige Elektrizität dazu verwenden über die Pumpe 21 Wasser von einem ersten natürlichen oder künstlich hierfür angelegtem Speicherbecken (nicht gezeigt) in ein zweites, höher gelegenes Speicherbecken (nicht gezeigt) zu pumpen. Die elektrische Energie wird dabei in potenzielle Energie umgewandelt. Zur Rückgewinnung von Elektrizität wird Wasser vom höher gelegenen Speicherbecken über die Turbine 20 zurück ins niedrigere Speicherbecken geleitet und Energie über die elektrische Einheit 1 in das Stromnetz 22 eingespeist.

Im Folgenden wird eine beispielhafte Ausführungsform zur Verwendung der elektrischen Einheit 1 beschrieben, dabei sind die beispielhafte Ausführungsform und deren Merkmale nicht als einschränkend zu verstehen.

In einem Verfahren zur Verwendung der elektrischen Einheit 1 für ein Pumpspeicherkraftwerk wird die Aufladeeinheit 5 dazu verwendet zum Einen um Kondensatoren und/oder Akkumulatoren aufweisende Zellen des Umrichters 3 vor dem direkten Verbinden des Umrichters 3 mit dem Stromnetz 22 langsam aufzuladen zumindest im Vergleich zu der direkten Verbindung des Umrichters 3 mit dem Stromnetz 22 und zum Anderen um den Blocktransformator 12 langsam aufzuladen oder zu magnetisieren zumindest im Vergleich zu der direkten Verbindung des Blocktransformators mit dem Stromnetz 22.

Bei Pumpspeicherkraftwerken wird die Maschine 4 in Abhängigkeit eines Überschusses oder eines Mangels von Energie im Stromnetz 22 als Motor oder Generator verwendet. Dabei wird die elektrische Einheit häufig von dem Stromnetz 22 beispielsweise zum Umschalten der Betriebsart als Motor oder Generator getrennt. Dabei kommt es vor, dass die Zellen des Umrichters 3 und der Blocktransformator 12 häufig neu aufgeladen oder magnetisiert werden müssen. Um diesen Vorgang schonend für die Komponenten des Umrichters 3 und des Blocktransformators 12 durchzuführen wird die entsprechend dieser Erfindung beschriebene elektrische Einheit verwendet.

Eine beispielhafte Ausführungsform des Verfahrens zur Verwendung der elektrischen Einheit 1 umfasst dabei zuerst ein Öffnen des Leistungsschalters 13 zum Trennen des Blocktransformators 12 von dem Stromnetz 22, sofern dieser nicht bereits von dem Stromnetz 22 getrennt ist. Dies ist normalerweise der Fall, wenn die Zellen des Umrichters 3 oder Blocktransformator 12 aufgeladen beziehungsweise magnetisiert werden müssen.

In einem weiteren Schritt wird der Generatorschalters 15 zur Trennung der Maschine 4 von dem Umrichter 3 und der Aufladeeinheit 5 geöffnet. Damit wird verhindert, dass die Maschine 4 den Aufladeprozess beeinträchtigt oder selbst Leistung von der Aufladeeinheit 5 abzieht.

In einem nächsten Schritt werden die Kondensatoren und/oder Akkumulatoren aufweisenden Zellen des Umrichters 3 aufgeladen, wobei der Schalter 7 der Aufladeeinheit 5 geschlossen wird und damit der Umrichter 3 über den Transformator 6 der Aufladeeinheit 5 mit dem Versorgungsnetz 2 verbunden wird. Dabei wird über den Transformator 6 der Aufladeeinheit 5 der Einschaltstrom beim Aufladen der Zellen des Umrichters 3 begrenzt und das Aufladen erfolgt im Vergleich zu einem direkten Anschluss des Umrichters 3 langsam.

Das Aufladen der Zellen des Umrichters 3 kann dabei in mehreren Schritten erfolgen. Eine Ausführungsform des Verfahrens umfasst dabei, dass das Aufladen der Zellen des Umrichters 3 eine erste Ladeperiode aufweist, wobei Schaltelemente 9, 10 des Umrichters 3 derart geschaltet werden, dass maschinenseitige Zellen des Umrichters 3 vollständig oder beinahe vollständig und netzseitige Zellen des Umrichters 3 nur teilweise geladen werden. In der ersten Ladeperiode wird somit der Einschaltstrom dadurch begrenzt, dass nur ein Teil der Zellen aufgeladen werden.

Eine weitere Ausführungsform des Verfahrens umfasst dabei, dass das Aufladen der Zellen des Umrichters 3 eine zweite Ladeperiode aufweist, wobei Schaltelemente 9, 10 des Umrichters 3 derart geschaltet werden, dass die netzseitigen Zellen des Umrichters 3 vollständig geladen werden. Dies kann beispielsweise durch einen Ausgleichstrom innerhalb des Umrichters 3 erfolgen, wobei Leistung von maschinenseitigen Zellen des Umrichters 3 zu den netzseitigen Zellen des Umrichters 3 übertragen wird. Unter Umständen ist eine erneute Aufladung der maschinenseitigen Zellen des Umrichters 3 in der zweiten Ladeperiode notwendig.

In einem weiteren Schritt des Verfahrens kann ein Magnetisieren des Blocktransformators 12 durch entsprechendes Steuern der Schaltelemente 9, 10 des Umrichters 3 erfolgen, wobei der Leistungsschalter 13 der Nebenleitung 11 zum Magnetisieren des Blocktransformators 12 geschlossen wird. Dabei hält ein Ausgleichsstrom die Zellen des Umrichters 3 ausgeglichen. Nach dem Abschluss der vollständigen Magnetisierung des Blocktransformators 12 wird der Schalter 7 der Aufladeeinheit wieder geöffnet.

Zur Inbetriebnahme der elektrischen Einheit 1 für das Pumpspeicherkraftwerkt wird der Leistungsschalters 13 zur Verbindung des Blocktransformators 12 mit dem Stromnetz 22 geschlossen. Im weiteren um die Maschine 4 mit dem Stromnetz 22 über den Umrichter 3 und/oder die Nebenleitung 11 zu verbinden wird der Generatorschalters 15 geschlossen.

### BEZUGSZEICHENLISTE

- 1: Elektrische Einheit
- 2: Stromnetz
- 3: Umrichter
- 4: Maschine
- 5: Aufladeeinheit
- 6: Transformator
- 7: Schalter
- 8: Frequenzumrichter
- 9: Schaltelement
- 10: Schaltelemente
- 11: Nebenleitung
- 12: Blocktransformator
- 13: Leistungsschalter
- 14: Leistungsschalter
- 15: Generatorschalter
- 16: Erregereinheit
- 17: Gleichrichter
- 18: Transformator
- 19: Schwarz-Startaggregat
- 20: Turbine
- 21: Pumpe
- 22: Stromnetz

## Patentansprüche

1. Elektrische Einheit (1) für ein Pumpspeicherkraftwerk, welche mit zumindest einem Stromnetz (22) zur Übertragung von elektrischer Energie verbindbar ist, umfassend zumindest einen Umrichter (3),
eine rotierende elektrische Synchron-Maschine (4) und
einen Generatorschalter (15), wobei
die Synchron-Maschine (4) über den Umrichter (3) mit dem Stromnetz (22) verbindbar ist und eine Erregereinheit (16) aufweist,
über welche Erregereinheit (16) die Synchron-Maschine (4) mit einem Versorgungsnetz (2) verbindbar ist, **dadurch gekennzeichnet,**
**dass** die elektrische Einheit eine Aufladeeinheit (5) zur Aufladen von Kondensatoren und Akkumulatoren von Zellen des Umrichters (3) aufweist, wobei
die Aufladeeinheit (5) zumindest einen Schalter (7) aufweist, und wobei die Aufladeeinheit (5) einerseits mit dem Versorgungsnetz (2) und andererseits mit dem Umrichter (3) verbindbar ist, und wobei der Generatorschalter zwischen der Aufladeeinheit (5) und der Synchron-Maschine (4) angeordnet ist.

2. Elektrische Einheit (1) nach Anspruch 1, **dadurch gekennzeichnet, dass** die Aufladeeinheit (5) einen Transformator (6) aufweist, um auf der Seite des Umrichters (3) eine Wechselspannung bereit zu stellen.

3. Elektrische Einheit (1) nach Anspruch 1 oder 2, **dadurch gekennzeichnet, dass** der Umrichter (3) einen Frequenzumrichter (8) sowie netzseitige Schaltelemente (9) und maschinenseitige Schaltelemente (10) aufweist.

4. Elektrische Einheit (1) nach einem der Ansprüche 1 bis 3, **dadurch gekennzeichnet, dass** die Synchron-Maschine (4) und die Aufladeeinheit (5) über eine Nebenleitung (11) direkt mit einem Blocktransformator (12) verbindbar sind, wobei der Blocktransformator (12) über einen Leistungsschalter (13) mit dem Stromnetz (22) verbindbar ist und die Nebenleitung (11) einen Leistungsschalter (14) aufweist.

5. Elektrische Einheit (1) nach Anspruch 4, **dadurch gekennzeichnet, dass** die Erregereinheit (16) einen Gleichrichter (17) und einen Transformator (18) aufweist.

6. Elektrische Einheit (1) nach einem der Ansprüche 1 bis 5, **dadurch gekennzeichnet, dass** die Aufladeeinheit (5) und die Erregereinheit (16) als eine integrierte Einheit ausgebildet sind.

7. Elektrische Einheit (1) nach einem der Ansprüche 1 bis 6, **dadurch gekennzeichnet, dass** der Umrichter (3) als Modularer Multilevel Umrichter ausgebildet ist.

8. Elektrische Einheit (1) nach einem der Ansprüche 1 bis 7, **dadurch gekennzeichnet, dass** ein Schwarzstart-Aggregat (19) zur Energieversorgung des Versorgungsnetz (2) an dieses angeschlossen ist.

9. System eines Pumpspeicherkraftwerk, **dadurch gekennzeichnet, dass** das System eine elektrische Einheit (1) nach einem der Ansprüche 1 bis 8 und eine mit der Synchron-Maschine (4) gekoppelte Turbine (20) und/oder Pumpe (21) und/oder Pumpenturbine aufweist.

10. Verfahren zum Aufladen einer elektrischen Einheit (1) für ein Pumpspeicherkraftwerk gemäß Anspruch 1 das Verfahren umfassend
Öffnen des Generatorschalters (15) zur Trennung der Synchron-Maschine (4) von dem Umrichter (3);
Aufladen von Kondensatoren und/oder Akkumulatoren aufweisenden Zellen des Umrichters (3) durch Schliessen eines Schalters (7) der Aufladeeinheit (5), wobei durch das Schliessen des Schalters (7) der Umrichter (3) über einen Transformator (6) der Aufladeeinheit (5) mit dem Versorgungsnetz (2) verbunden wird; und Schliessen des Generatorschalters (15) zur Verbindung der Synchron-Maschine (4) mit dem Umrichter (3) und/oder der Nebenleitung (11).

11. Verfahren zur Verwendung einer elektrischen Einheit (1) nach Anspruch 10, **dadurch gekennzeichnet, dass** das Aufladen der Zellen des Umrichters (3) eine erste Ladeperiode aufweist, wobei Schaltelemente (9, 10) des Umrichters (3) derart geschaltet werden, dass maschinenseitige Zellen des Umrichters (3) vollständig und netzseitige Zellen des Umrichters (3) teilweise geladen werden.

12. Verfahren zur Verwendung einer elektrischen Einheit (1) nach Anspruch 10 oder 11, **dadurch gekennzeichnet, dass** das Aufladen der Zellen des Umrichters (3) eine zweite Ladeperiode aufweist, wobei Schaltelemente (9, 10) des Umrichters (3) derart geschaltet werden, dass die netzseitigen Zellen des Umrichters (3) vollständig geladen werden.

13. Verfahren zur Verwendung einer elektrischen Einheit (1) nach einem der Ansprüche 10, 11 oder 12, **dadurch gekennzeichnet, dass** nach dem Aufladen der Zellen des Umrichters (3) das Verfahren weiter umfasst
Magnetisieren des Blocktransformators (12) durch entsprechendes Steuern der Schaltelemente (9, 10) des Umrichters (3;
Schliessen des Leistungsschalters (13) zur Verbindung des Blocktransformators (12) mit dem Stromnetz (22).

14. Verfahren zur Verwendung einer elektrischen Einheit (1) nach einem der Ansprüche 10 bis 13, **dadurch gekennzeichnet, dass** der Leistungsschalter (13) der Nebenleitung (11) zum Magnetisieren des Blocktransformators (12) geschlossen wird

## Claims

1. Electric unit (1) for a pumped storage power plant, which electric unit (1) can be connected to at least one power grid (22) for transmitting electrical energy, comprising at least one converter (3),
a rotating electric synchronous machine (4), and a generator switch (15), wherein
the synchronous machine (4) can be connected to the power grid (22) via the converter (3), and has an exciter unit (16),
by means of which exciter unit (16) the synchronous machine (4) can be connected to a supply grid (2), **characterized**
**in that** the electric unit has a charging unit (5) for charging capacitors and accumulators of cells of the converter (3), wherein
the charging unit (5) has at least one switch (7), and wherein
the charging unit (5) can be connected to the supply grid (2), on the one hand, and to the converter (3), on the other, and wherein the generator switch is arranged between the charging unit (5) and the synchronous machine (4).

2. Electric unit (1) according to Claim 1, **characterized in that** the charging unit (5) has a transformer (6) in order to make available an alternating voltage on the converter (3) side.

3. Electric unit (1) according to Claim 1 or 2, **characterized in that** the converter (3) has a frequency converter (8) and grid-side switching elements (9) and machine-side switching elements (10).

4. Electric unit (1) according to one of Claims 1 to 3, **characterized in that** the synchronous machine (4) and the charging unit (5) can be connected directly to a block transformer (12) via a secondary line (11), wherein the block transformer (12) can be connected to the power grid (22) via a power switch (13), and the secondary line (11) has a power switch (14).

5. Electric unit (1) according to Claim 4, **characterized in that** the exciter unit (16) has a rectifier (17) and a transformer (18).

6. Electric unit (1) according to one of Claims 1 to 5, **characterized in that** the charging unit (5) and the exciter unit (16) are embodied as one integrated unit.

7. Electric unit (1) according to one of Claims 1 to 6, **characterized in that** the converter (3) is embodied as a modular multilevel converter.

8. Electric unit (1) according to one of Claims 1 to 7, **characterized in that** a black start assembly (19) for supplying energy from the supply grid (2) is connected thereto.

9. System of a pumped storage power plant, **characterized in that** the system has an electric unit (1) according to one of Claims 1 to 8 and a turbine (20) and/or pump (21) and/or pump turbine coupled to the synchronous machine (4).

10. Method for charging an electric unit (1) for a pumped storage power plant according to Claim 1, the method comprising
opening the generator switch (15) in order to disconnect the synchronous machine (4) from the converter (3);
charging cells of the converter (3) which have capacitors and/or accumulators by closing a switch (7) of the charging unit (5), wherein
by closing the switch (7) the converter (3) is connected to the supply grid (2) via a transformer (6) of the charging unit (5); and
closing the generator switch (15) in order to connect the synchronous machine (4) to the converter (3) and/or the secondary line (11).

11. Method for using an electric unit (1) according to Claim 10, **characterized in that** the charging of the cells of the converter (3) has a first charging period, wherein switching elements (9, 10) of the converter (3) are switched in such a way that machine-side cells of the converter (3) are charged completely and grid-side cells of the converter (3) are charged partially.

12. Method for using an electric unit (1) according to Claim 10 or 11, **characterized in that** the charging of the cells of the converter (3) has a second charging period, wherein switching elements (9, 10) of the converter (3) are switched in such a way that the grid-side cells of the converter (3) are charged completely.

13. Method for using an electric unit (1) according to one of Claims 10, 11 or 12, **characterized in that** after the charging of the cells of the converter (3) the method also comprises
magnetizing the block transformer (12) by correspondingly controlling the switching elements (9, 10) of the converter (3);
closing the power switch (13) in order to connect the block transformer (12) to the power grid (22).

14. Method for using an electric unit (1) according to one of Claims 10 to 13, **characterized in that** the power switch (13) of the secondary line (11) is closed in order to magnetize the block transformer (12).

## Revendications

1. Unité électrique (1) destinée à une centrale hydraulique d'accumulation par pompage, qui peut être connectée à au moins un réseau électrique (22) pour transmettre de l'énergie électrique, comprenant au moins un convertisseur (3),
une machine synchrone électrique rotative (4) et
un commutateur de générateur (15), dans laquelle la machine synchrone (4) peut être connectée par l'intermédiaire du convertisseur (3) au réseau électrique (22) et comporte une unité excitatrice (16),
unité excitatrice (16) par l'intermédiaire de laquelle la machine synchrone (4) peut être connectée à un réseau d'alimentation (2), **caractérisée en ce que** l'unité électrique comporte une unité de chargement (5) destinée à charger des condensateurs et des accumulateurs de cellules du convertisseur (3), dans laquelle l'unité de chargement (5) comporte au moins un commutateur (7), et dans laquelle
l'unité de chargement (5) peut d'une part être connectée au réseau d'alimentation (2) et d'autre part au convertisseur (3), et dans laquelle le commutateur de générateur est disposé entre l'unité de chargement (5) et la machine synchrone (4).

2. Unité électrique (1) selon la revendication 1, dans laquelle l'unité de chargement (5) comporte un transformateur (6) destiné à fournir une tension alternative du côté du convertisseur (3).

3. Unité électrique (1) selon la revendication 1 ou 2, **caractérisée en ce que** le convertisseur (3) comporte un convertisseur de fréquence (8) ainsi que des éléments de commutation côté réseau (9) et des éléments de commutation côté machine (10).

4. Unité électrique (1) selon l'une quelconque des revendications 1 à 3, **caractérisée en ce que** la machine synchrone (4) et l'unité de chargement (5) peuvent être directement connectées par l'intermédiaire d'une dérivation (11) à un transformateur de ligne (12), dans laquelle le transformateur de ligne (12) peut être connecté par l'intermédiaire d'un commutateur de puissance (13) au réseau électrique (22), et la ligne auxiliaire (11) comporte un commutateur de puissance (14).

5. Unité électrique (1) selon la revendication 4, **caractérisée en ce que** l'unité excitatrice (16) comporte un redresseur (17) et un transformateur (18).

6. Unité électrique (1) selon l'une quelconque des revendications 1 à 5, **caractérisée en ce que** l'unité de chargement (5) et l'unité excitatrice (16) sont réalisées sous la forme d'une unité intégrée.

7. Unité électrique (1) selon l'une quelconque des revendications 1 à 6, **caractérisée en ce que** le convertisseur (3) est réalisé sous la forme d'un convertisseur modulaire à niveaux multiples.

8. Unité électrique (1) selon l'une quelconque des revendications 1 à 7, **caractérisée en ce qu'**un groupe de démarrage autonome (19) destiné à l'alimentation en énergie du réseau d'alimentation (2) est raccordé à ce dernier.

9. Système d'une centrale hydraulique d'accumulation par pompage, **caractérisé en ce que** le système comporte une unité électrique (1) selon l'une quelconque des revendications 1 à 8 et une turbine (20) et/ou une pompe (21) et/ou une turbine de pompage couplée(s) à la machine synchrone (4).

10. Procédé de chargement d'une unité électrique (1) destinée à une centrale hydraulique d'accumulation par pompage selon la revendication 1, le procédé consistant à :
ouvrir le commutateur de générateur (15) pour séparer la machine synchrone (4) du convertisseur (3) ;
charger des condensateurs et/ou des accumulateurs comportant des cellules du convertisseur (3) en fermant un commutateur (7) de l'unité de chargement (5), dans lequel le convertisseur (3) est connecté au réseau d'alimentation (2) par l'intermédiaire d'un transformateur (6) de l'unité de chargement (5) par fermeture du commutateur (7) ; et
fermer le commutateur de générateur (15) pour connecter la machine synchrone (4) au convertisseur (3) et/ou à la ligne auxiliaire (11).

11. Procédé d'utilisation d'une unité électrique (1) selon la revendication 10, **caractérisé en ce que** le chargement des cellules du convertisseur (3) comporte une première période de charge, dans lequel des éléments de commutation (9, 10) du convertisseur (3) sont connectés de manière à ce que des cellules côté machine du convertisseur (3) soient entièrement chargées et que des cellules côté réseau du convertisseur (3) soient partiellement chargées.

12. Procédé d'utilisation d'une unité électrique (1) selon la revendication 10 ou 11, **caractérisé en ce que** le chargement des cellules du convertisseur (3) comporte une seconde période de chargement, dans lequel des éléments de commutation (9, 10) du convertisseur (3) sont chargés de manière à ce que les cellules côté réseau du convertisseur (3) soient entièrement chargées.

13. Procédé d'utilisation d'une unité électrique (1) selon l'une quelconque des revendications 10, 11 ou 12, **caractérisé en ce que**, après le chargement des cellules du convertisseur (3), le procédé consiste en outre à :
magnétiser le transformateur de ligne (12) par une commande correspondante des éléments de commutation (9, 10) du convertisseur (3) ;
fermer le commutateur de puissance (13) pour connecter le transformateur de ligne (12) au réseau électrique (22).

14. Procédé d'utilisation d'une unité électrique (1) selon l'une quelconque des revendications 10 à 13, **caractérisé en ce que** le commutateur de puissance (13) de la ligne auxiliaire (11) est fermé pour magnétiser le transformateur de ligne (12).
